# EUROPEAN PATENT SPECIFICATION

(11) **EP 2 451 244 B1**
(45) Date of publication and mention of the grant of the patent: **05.12.2018**
(21) Application number: 11306317.6
(22) Date of filing: 11.10.2011
(51) Int. Cl.: H05B 3/56, F16L 53/00

(54) **Direct electrical heating flow system**
Elektrisches Direkterwärmungsflusssystem
Système de débit de chauffage électrique direct

(30) Priority: 03.11.2010 NO 20101543
(43) Date of publication of application: 09.05.2012
(73) Proprietor: Nexans, 92400 Courbevoie (FR)
(72) Inventor: Lund, Kristian Sjur, 1785 HALDEN (NO)
(74) Representative: Gauer, Pierre

(56) References cited:
- EP-A1- 2 233 810
- DE-C1- 4 408 836
- GB-A- 2 233 788
- US-A- 4 672 176

## Description

### Field of the invention

The present invention relates to direct electrical heating (DEH) flow systems.

### Background of the invention

Many industrial activities require fluids to be transported from one location to another. The fluids can be one or more of: gases, liquids, scum, emulsions. It is conventional contemporary practice to guide such fluids via pipes. In order to avoid the pipes from becoming blocked, for example due to fluids solidifying to block the pipes, it is contemporary practice to provide the pipes with electrical heating therealong. The electrical heating is conveniently provided via cables which are conveyed parallel to pipes providing a route along which fluids can flow. For example, pipes in oil and gas production facilities conveying hydrocarbon gas including water vapour are susceptible to form spontaneously hydrate deposits which can block flow within the pipes. In such situations, direct electrical heating of the pipes is highly beneficial to achieve reliable flow therein.

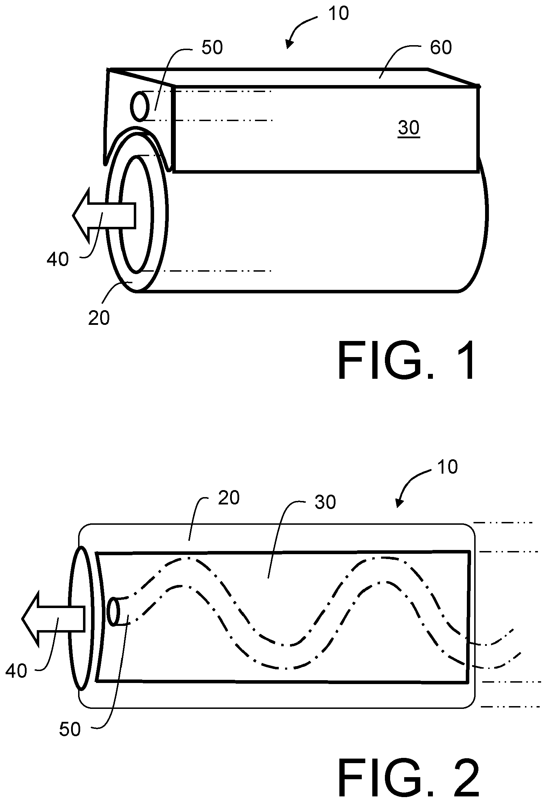

It is contemporary practice in a known type of flow system indicated by **10** in FIG. 1 to include a pipe **20** with a cable conduit **30** mounted in parallel with the pipe **20**. The pipe **20** is operable to guide a flow **40** of a fluid therethrough. A cable **50** is included within the conduit **30** for conveying electrical power and signals. A practical problem encountered in practice is that the cable **50** exhibits less thermal expansion in comparison to the pipe **20**. Such a difference in thermal expansion can potentially cause at least one of the pipe **20** and the cable **50** to become stressed as temperature of the system **10** varies, and can potentially cause the system **10** to assume a bowed shape. The temperature of the system **10** can vary, for example, on account of the pipe **20** conveying a flow whose temperature temporally varies.

A conventional approach to render the system **10** more robust is to size the conduit **30** so that the cable **50** lies loosely therein, for example in a zigzag snake-like manner as illustrated in FIG. 2. However, such oversizing of the conduit renders the system **10** more bulky in storage, and renders the system **10** more expensive in manufacture as a result of more materials being employed. The system **10** has other problems concerning robustness in that the cables **50** are prone to impact damage. And optical fibres for conveying signals also enclosed within the conduit **30** are prone to sustaining impact damage. A conventional approach to render the system **10** more robust is to provide that conduit **30** with armouring to protect it from impact damage; however, such a solution renders the system **10** expensive and bulky. It is known to provide the aforementioned conduit **30** of the system **10** with compliant impact protection on its outermost surface **60** to provide the cable **50** with an enhanced degree of mechanical protection. However, such an approach merely increases bulk and manufacturing cost of the system **10**.

Furthermore, document DE 44 08 836 C1 discloses a cable incorporating a sensing optical fibre for measuring a specific thermal resistance of a medium.

### Summary of the invention

The present invention seeks to provide a more robust and economical direct electrical heating flow system.

According to the present invention, there is provided a direct electrical heating flow system as claimed in appended claim 1.

The system according to the invention has soft bedding under the copper wires (the conductive region). When the cable is exposed to impact forces, the copper wires are allowed to decrease the pitch diameter and the layer of copper wires will be able to flex from a circular to oval shape. Due to this, the other material in the cable can absorb the impact energy.

The soft bedding under the copper wires allows the copper wires to decrease the pitch diameter when exposed to an axial load. The copper wires can be stranded with a short lay-length. The minimum lay angle will typically be 17-20 degrees. A high lay angle will give a short lay length, hence a more flexible (low bending stiffness) power phase. The high lay-angle will enable the copper wires to squeeze harder on the soft bedding when the cable is exposed to an axial load. Hence, the copper wires are able decrease the pitch diameter witch will lead to axial elongation of the copper in the power phase and the tensions in the copper wires are kept below critical limit. When the cable itself can follow the flow lines length variation caused by temperature variation it is not necessary to install the cable with an excess length.

The invention is of advantage in that the cable is more robust, thereby rendering the flow system mo reliable and/or easier to install.

The soft bedding can be a polymer or a rubber sheath.

Optionally, the direct electrical heating flow system is implemented such that the optical fibre waveguide region is centrally disposed within the inner conducting region for providing the optical fibre waveguide region with enhanced protection against impact.

It is an advantage to monitor the temperature of the cable in order to prevent over-heating and failure. In order to monitor the temperature of the cable, the optical fibres can be placed in the centre of the cable. In the centre, the optical fibres are well protected with respect to impact forces, bending and fatigue and will not be the critical element in the cable. Optical fibres can also be used for strain monitoring or traditional signal transmission. The optical fibres can also be used to locate damage on the cable, if the cable is damaged by for example fishing trawls and the insulation system is damaged there will be an increased temperature in the damaged region and hence the damaged region can be located and repaired. If the damage is so severe that the fiber itself is damaged or broken the damaged region can be located and repaired.

Optionally, the direct electrical heating flow system is implemented such that the outer annular conductive region is implemented, at least in part, using electrically-conductive flexible polymer material. More optionally, the electrically-conductive flexible polymer material includes an electrically-conductive rubber material, for example a semiconductive rubber-like material.

Optionally, the direct electrical heating flow system is implemented such that the inner conductive region comprises at least one metallic conductor whose laying angle is in a range of 17° to 20°.

Optionally, the direct electrical heating flow system is implemented such that the annular insulating region is implemented by a semiconductive sheath surrounding the inner conducting region, and a polymer material insulating sheath surrounding the semi-conducting sheath.

Optionally, the thickness of the semiconductive sheath is at least 10-20% of the thickness of the polymer material insulating sheath, and preferably up to 50% of the thickness of the polymer material insulating sheath. Thus, the thickness of the semiconductive sheath can be at least 10% of the thickness of the polymer material insulating sheath, at least 20% of the thickness of the polymer material insulating sheath, in a range of 10 to 20% of the thickness of the polymer material insulating sheath, in a range of 10 to 50% of the thickness of the polymer material insulating sheath, or in a range of 20 to 50% of the thickness of the polymer material insulating sheath.

Optionally, the direct electrical heating flow system is implemented so that the cable is attached via a conduit to the at least one flow pipe. More optionally, the direct electrical heating flow system is implemented such that the conduit is strapped at periodic spatial intervals to the at least one flow pipe. There might be in some cases that additional protection conduits are not needed. The cable will then be directly strapped to the flowline.

Optionally, the direct electrical heating flow system is implemented such that the inner conductive region is adapted to convey current for heating at least a portion of the at least one flow pipe, and the optical fibre waveguide region is operable to convey signals corresponding to one or more physical measurements performed upon the at least one flow pipe.

According to another aspect, there is provided a method of manufacturing a cable, characterized in that the method includes:
(a) enclosing an optical fibre waveguide region including at least one optical fibre waveguide within an inner conductive region, wherein the at least one optical fibre waveguide is adapted for conveying at least one information-bearing signal;
(b) enclosing the inner conductive region within an annular insulating region and peripheral thereto an outer annular conductive region.

According to another aspect, there is provided a cable adapted for use in a direct electrical heating flow system, characterized in that the cable includes an inner conducting region surrounded by an annular insulating region and peripheral thereto an outer annular conducting region; and the inner conductive region encloses an optical fibre waveguide region including at least one optical fibre waveguide for conveying at least one information-bearing signal.

According to another aspect, there is provided a method of manufacturing a direct electrical heating flow system of the invention using a cable as described above, characterized in that the method includes:
(a) including the cable within a conduit; and
(b) attaching the conduit to at least one flow tube of the flow system.
Steps (a) and (b) are susceptible to being executed in either order.

### Description of the diagrams

Embodiments of the present invention will now be described, by way of example only, with reference to the following diagrams wherein:
- FIG. 1: is an illustration of a contemporary known direct electrical heating (DEH) flow system;
- FIG. 2: is an illustration of a zigzag snake-like disposition of a cable within a conduit of the system in FIG. 1;
- FIG. 3: is an illustration of an embodiment of a direct electrical heating (DEH) flow system according to the present invention; and
- FIG. 4: is an illustration of a cross-section of a cable according to the present invention compared to a cross-section of a conventional cable.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### Description of embodiments of the invention

The contemporary system **10** of FIG. 1 and FIG. 2 is potentially fragile in that an impact on the conduit **30** can potentially damage the cable **50** and any optical fibres running alongside the cable **50** for conveying control signals and measurement signals. A conventional approach to improve robustness for the system **10** is to improve armouring associated with the conduit **30**. However, as aforementioned, such additional armouring increases bulk of the system **10**. The present invention seeks to provide an alternative solution to this problem of bulk juxtaposed to robustness.

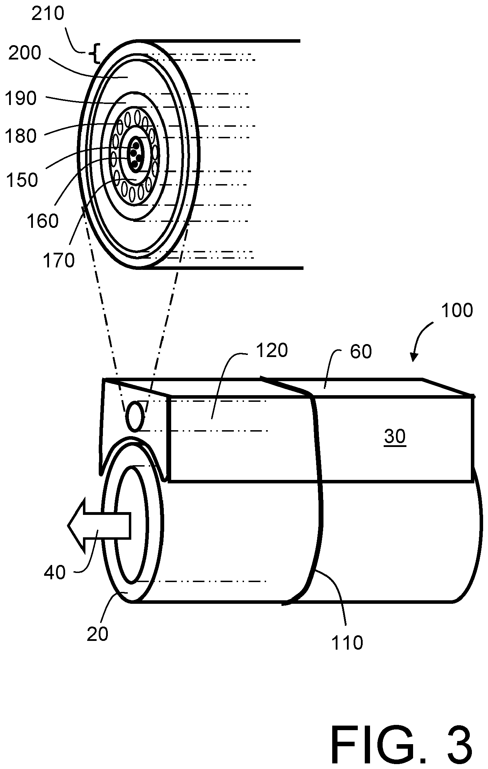

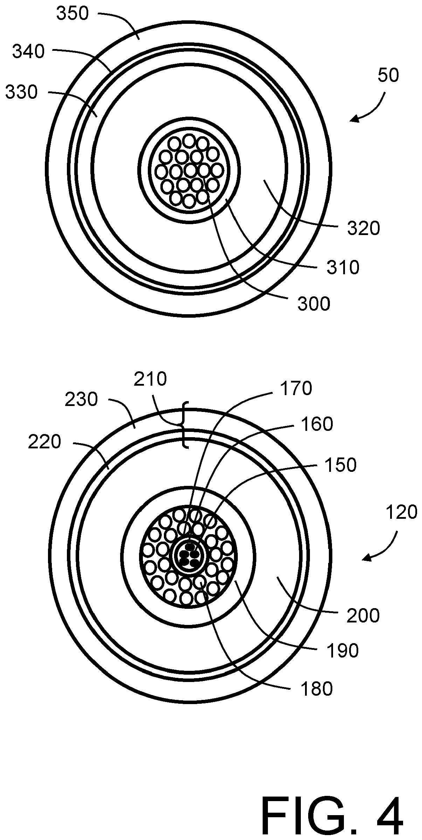

Referring to FIG. 3, an embodiment of the present invention is a direct electrical heat (DEH) flow system indicated generally by **100**. The system **100** is generally similar to the system **10**, but with an important difference that the system **100** employs a cable **120** in its conduit **30**. Moreover, the system **100** optionally employs straps **110** to bind the conduit **30** to the pipe **20**. The cable **120** has a structure which is distinguished from the cable **50**. The cable **120** includes a central core having one or more optical fibre waveguides **150** for conveying optical signals, for example as illustrated in a lower portion of FIG. 4. The central core including its waveguides **150** is enclosed within a steel tube sheath **160** which is itself enclosed within a soft sheath **170** of polymer or rubber. Encircling the soft sheath 170 are one or more annular layers of annealed copper wires **180** which are themselves circumferentially surrounded by a semiconductive sheath **190**. The sheath **190** is encircled by a cross-linked polyethylene (PEX) insulating sheath **200**. The PEX sheath **200** is surrounded by an outer semiconductive rubber sheath **210** comprising one or more concentric annular layers **220**, **230**. Although the cable **120** is shown to have a generally circular cross-section, it can optionally be manufactured to have an ellipsoidal cross-section for enabling it to fit more snugly into the conduit **30** of the system **100.** Construction of the cable **120** is in itself unique in design, thereby rendering the system **100** unique in design.

Contrary to the cable **120**, the conventional cable **50** includes a central core **300** comprising one or more annealed copper wires, a semiconductive sheath **310** surrounding the **300**, a PEX insulating sheath **320** surrounding the sheath **310**, a semiconductive sheath 330, an annular copper wrapping **340** surrounding the semi-conductive sheath **330**, and finally a polyethylene insulating sheath **350** surrounding the copper wrapping **340**. The cable **50** therefore has a completely different construction in comparison to the cable **10** used for implementing the present invention. The cable **120** represents a considerable improvement relative to the cable **50** on account several important technical details.

As elucidated in the foregoing, direct electrical heating (DEH) of flow lines is implemented using a high voltage cable attached to the flow lines, for example as illustrated in FIG. 1. Depending upon types of fluid flowing within the flow lines and environmental conditions around the flow lines, the lines are exposed potentially to large temperature differences and will, in consequence due to thermal expansion, exhibit different lengths as a function of temperature variations. Conventionally, high voltage electrical cables exhibit a low elongation capacity of approximately 0.1%; in other words, stretching the electrical cables in their elongate axis by more than approximately 0.1% can result in damage to the cables. However, flow lines are often manufactured from materials, for example high performance polymeric materials or metals, which can exhibit 0.2 to 0.6% length variation over a temperature range over which the flow lines are designed to operate. There therefore arises a need for the high voltage electrical cables running along the flow lines to be able to accommodate changes in length of the flow lines. Moreover, as aforementioned, on account of the flow lines being heavy items, the cables running along the flow lines are prone to suffering impact damage when the flow lines are moved and manoeuvred during installation and/or maintenance. Operationally, it is desirable to monitor temperature along an entire length of the flow lines, or example via use of optical fibre waveguides. In the cable **120** employed in the system **100**, the optical fibres **150** are beneficially housed within a steel tube **160** at a centre of the cable **120** for optimal mechanical protection. Optionally, the optical fibres **150** can be employed for purposes of strain monitoring and/or signal communication along the flow lines, namely the pipe **20**. Monitoring of temperature along the flow lines is high beneficial, for example, for avoiding freezing which could cause blockage of the flow lines.

The cable **120** employed in the system **100** has considerably better impact survival characteristics in comparison to conventional cables, for example in comparison to the cable **50** employed in the known contemporary system **10**. In the cable **50**, the polyethylene sheath **350** is expected to bear impact damage so that the copper wrapping **340** amongst others is not damaged, see FIG. 4. In practice, protection offered by the sheath **350** is often inadequate.

The cable **120** can employs soft bedding around its copper wires 180, for example by way of the sheaths **200**, **210** which are elastic, compliant a resistant to impact damage. Even the copper wires **180** are able to momentarily deform in the cable **120** to withstand impacts. In the cable **50**, the sheath **310** is a weak point; a corresponding layer in the cable **120** is represented by the sheath 190 which can be relatively considerably thicker, for example in a range of 50% to 100% thicker than is customary for the cable **50**; beneficially, the sheath **190** is at least 10-20% as thick as the PEX sheath **200**, more preferable up to 50% as thick as the PEX sheath **200**. Moreover, the cable **120** includes the conductive rubber sheath **210** which provides considerably more robust protection against impact in comparison to the polyethylene sheath **350** of the cable **50**. In the cable **120**, due to the soft bedding **170**, the wires **180** are capable of decreasing their pitch diameter in a situation where the cable **120** is subjected to more severe axial stresses. Optionally, the copper wires **180** are stranded with a short lay-length. Beneficially, the wires **190** have a lay angle in a range of 17° to 20°. By employing such a high lay angle, the cable **120** is rendered less stiff to lateral forces, namely orthogonal to an axial direction of the cable **120**, making it more manoeuvrable; such a mechanical characteristic enables the copper wires **180** to be squeezed harder onto their associated soft bedding when the cable **120** is subject to axial stresses, namely axial loads. When the cable **120** is subjected to axial load, the copper wires **180** are capable of decreasing pitch diameter, thereby allowing axial elongation of the cable **120** which also reduces tension in the copper wires **180** to below a critical damage threshold. Thus, the cable **120** is capable of following expansion and contraction of its associated pipe **20**, namely flow line, as a consequence of temperature variations without n need for the cable **120** to be laid loosely in a zigzag snake-like manner in the conduit **30**.

During operation, it is desirable to measure the temperature of the cable **120**, namely for preventing overheating and associated failure. The optical fibre waveguides **150** are adapted to measure a true representative temperature of the cable **120** when the waveguides **150** are disposed centrally within the cable **120**. Such a disposition is also synergistically of benefit in that the waveguides **150** are also optimally protected against impact damage, bending and fatigue effects. The optical fibre waveguides **150** are optionally operable to measure strain and temperature by way of Bragg-grating Mach-Zehnder interferometric-type sensors, via thermochromic sensors and similar.

Optionally, the conduit **30** comprises a first portion which is attached to the pipe **20** in FIG. 3, and a second lid portion which cooperates with the first portion to form an elongate cavity for accommodating the cable **120**. The conduit **30** is optionally attached to the pipe by way of straps **110**, although other forms of attachment may alternatively be employed, for example peripheral helical spiral bands. Although PEX and conductive rubber are mentioned as materials for use in manufacturing the cable **120**, it will be appreciated that alternative materials exhibiting generally similar mechanical and electrical properties can alternatively be employed. PEX is manufactured from polyethylene which has been subject to one or more cross-linking process, for example via electron bean exposure, peroxide reaction or similar.

A method of manufacturing the cable **120** will now be described. Initially, the one or more optical fibre waveguides **150** are collected together and then the steel tube **160** formed therearound, for example by folding sides of a steel strip together and then welding together the sides of the strip where they mutually meet together. Thereafter, the polymer sheath **170** is moulded onto the steel tube **160** to which the annealed copper wires are added **180**, whilst the semiconductive sheath **190** is moulded around the wires **180**. Thereafter, the layer of PEX polymer **200** is moulded onto the sheath **190** and then finally the semiconductive rubber sheath **210** is added. Manufacture of the cable **120** is beneficially implemented in a roll-good and/moulded continuous manner, thereby enabling the cable **120** to be relatively long, for example several kilometres long. It will be appreciated in a length of the cable **120** several kilometres in length and required to exhibit high integrity of insulation along its length, namely be uncompromised in performance, that damage at one or more specific locations along the cable **120** can represent enormous economic loss. In such a context, the present invention is potentially of enormous value by rendering the cable **120** highly robust.

## Claims

1. A direct electrical heating flow system (100) including at least one flow pipe (20) and at least one cable (120) disposed along said at least one flow pipe (20) and providing heating to said at least one flow pipe (20), said cable (120) including an inner conductive region made of one or more annular layers of copper wires (180), surrounded by an annular insulating region (190, 200) and peripheral thereto an outer annular conductive region (210); **characterized in that** said inner conductive region (180) encloses a central core comprising a steel tube (160) centrally disposed within said inner conductive region (180), forming an optical fibre waveguide region and including at least one optical fibre waveguide (150) for conveying at least one information-bearing signal said optical fibre waveguide region being surrounded by a soft bedding sheath (170) located between said steel tube (160) and said one or more annular layers of copper wires.

2. A direct electrical heating flow system (100) as claimed in claim 1, wherein the soft bedding (170) is a polymer or a rubber sheath (170).

3. A direct electrical heating flow system (100) as claimed in claim 1 or 2, wherein said outer annular conductive region (210) is implemented, at least in part, using electrically-conductive flexible polymer material.

4. A direct electrical heating flow system (100) as claimed in claim 3, wherein said electrically-conductive flexible polymer material includes an electrically-conducting rubber material.

5. A direct electrical heating flow system (100) as claimed in any one of the preceding claims, wherein said inner conductive region comprises at least one metallic layer of copper wires (180) that are stranded with a short lay-length.

6. A direct electrical heating flow system (100) as claimed in claim 5, wherein said inner conductive region comprises at least one metallic layer of stranded copper wires (180) whose laying angle is in a range of 17° to 20°.

7. A direct electrical heating flow system (100) as claimed in any one of the preceding claims, wherein the annular insulating region (190, 200) is implemented by a semiconductive sheath (190) surrounding the inner conductive region (180), and a polymer material insulating sheath (200) surrounding the semiconductive sheath (190).

8. A direct electrical heating flow system (100) as claimed in claim 7, wherein the thickness of the semiconductive sheath (190) is at least 10% of the thickness of the polymer material insulating sheath (200).

9. A direct electrical heating flow system (100) as claimed in any one of the preceding claims, wherein the cable (120) is attached via a conduit (30) to the at least one flow pipe (20).

10. A direct electrical heating flow system (100) as claimed in claim 9, wherein the conduit (30) is strapped at periodic spatial intervals to the at least one flow pipe (20).

11. A direct electrical heating flow system (100) as claimed in any one of the preceding claims, wherein said inner conductive region (180) is adapted to convey current for heating at least a portion of said at least one flow pipe (20), and said optical fibre waveguide region (160) is operable to convey signals corresponding to one or more physical measurements performed upon said at least one flow pipe (20).

## Patentansprüche

1. Flusssystem mit direkter elektrischer Beheizung (100), das mindestens ein Vorlaufrohr (20) und mindestens ein Kabel (120) beinhaltet, das entlang des mindestens einen Vorlaufrohrs (20) angeordnet ist und Beheizung für das mindestens eine Vorlaufrohr (20) bereitstellt, wobei das Kabel (120) eine innere leitende Region, die aus einer oder mehreren ringförmigen Schichten aus Kupferdrähten (180), umgeben von einer ringförmigen isolierenden Region (190, 200), besteht, und peripher dazu eine äußere ringförmige leitende Region (210) beinhaltet,
**dadurch gekennzeichnet, dass** die innere leitende Region (180) einen mittigen Kern umschließt, der ein Stahlrohr (160) umfasst, das mittig in der inneren leitenden Region (180) angeordnet ist, dabei eine Lichtleitfaserregion bildet und mindestens eine Lichtleitfaser (150) zum Transportieren mindestens eines Informationen tragenden Signals beinhaltet, wobei die Lichtleitfaserregion von einer weichen Polsterungshülle (170) umgeben ist, die sich zwischen dem Stahlrohr (160) und der einen oder den mehreren Schichten aus Kupferdrähten befindet.

2. Flusssystem mit direkter elektrischer Beheizung (100) nach Anspruch 1, wobei die weiche Polsterung (170) eine Polymer- oder eine Kautschukhülle (170) ist.

3. Flusssystem mit direkter elektrischer Beheizung (100) nach Anspruch 1 oder 2, wobei die äußere ringförmige leitende Region (210) zumindest teilweise unter Verwendung von elektrisch leitendem flexiblem Polymermaterial ausgeführt ist.

4. Flusssystem mit direkter elektrischer Beheizung (100) nach Anspruch 3, wobei das elektrisch leitende flexible Polymermaterial ein elektrisch leitendes Kautschukmaterial beinhaltet.

5. Flusssystem mit direkter elektrischer Beheizung (100) nach einem der vorhergehenden Ansprüche, wobei die innere leitende Region mindestens eine metallische Schicht aus Kupferdrähten (180) umfasst, die mit einer kurzen Schlaglänge verseilt sind.

6. Flusssystem mit direkter elektrischer Beheizung (100) nach Anspruch 5, wobei die innere leitende Region mindestens eine metallische Schicht aus verseilten Kupferdrähten (180) umfasst, deren Schlagwinkel im Bereich von 17° bis 20° liegt.

7. Flusssystem mit direkter elektrischer Beheizung (100) nach einem der vorhergehenden Ansprüche, wobei die ringförmige isolierende Region (190, 200) durch eine halbleitende Hülle (190), die die innere leitende Region (180) umgibt, und eine isolierende Hülle (200) aus Polymermaterial, die die halbleitende Hülle (190) umgibt, ausgeführt ist.

8. Flusssystem mit direkter elektrischer Beheizung (100) nach Anspruch 7, wobei die Dicke der halbleitenden Hülle (190) mindestens 10% der Dicke der isolierenden Hülle (200) aus Polymermaterial beträgt.

9. Flusssystem mit direkter elektrischer Beheizung (100) nach einem der vorhergehenden Ansprüche, wobei das Kabel (120) über eine Leitungsführung (30) an dem mindestens einen Vorlaufrohr (20) angebracht ist.

10. Flusssystem mit direkter elektrischer Beheizung (100) nach Anspruch 9, wobei die Leitungsführung (30) in regelmäßigen räumlichen Intervallen an dem mindestens einen Vorlaufrohr (20) festgebunden ist.

11. Flusssystem mit direkter elektrischer Beheizung (100) nach einem der vorhergehenden Ansprüche, wobei die innere leitende Region (180) dafür eingerichtet ist, Strom zur Beheizung mindestens eines Abschnitts des mindestens einen Vorlaufrohrs (20) zu transportieren, und die Lichtleitfaserregion (160) dazu dient, Signale zu transportieren, die einer oder mehreren physikalischen Messungen entsprechen, die an dem mindestens einen Vorlaufrohr (20) durchgeführt werden.

## Revendications

1. Système d'écoulement de chauffage électrique direct (100) comportant au moins un tuyau d'écoulement (20) et au moins un câble (120) disposé le long dudit au moins un tuyau d'écoulement (20) et fournissant de la chaleur audit au moins un tuyau d'écoulement (20), ledit câble (120) comportant une région conductrice interne constituée d'une ou plusieurs couches annulaires de fils de cuivre (180), entourées par une région isolante annulaire (190, 200) et à la périphérie de celle-ci une région conductrice annulaire externe (210) ; **caractérisé en ce que** ladite région conductrice interne (180) enferme un noyau central comprenant un tube d'acier (160) disposé de manière centrale à l'intérieur de ladite région conductrice interne (180) formant une région de guide d'onde à fibre optique et comportant au moins un guide d'onde à fibre optique (150) pour acheminer au moins un signal portant des informations, ladite région de guide d'onde à fibre optique étant entourée par une gaine matelas souple (170) située entre ledit tube d'acier (160) et lesdites une ou plusieurs couches annulaires de fils de cuivre.

2. Système d'écoulement de chauffage électrique direct (100) selon la revendication 1, dans lequel le matelas souple (170) est une gaine polymère ou de caoutchouc (170).

3. Système d'écoulement de chauffage électrique direct (100) selon la revendication 1 ou 2, dans lequel ladite région conductrice annulaire externe (210) est mise en oeuvre, au moins en partie, au moyen d'un matériau polymère flexible électro-conducteur.

4. Système d'écoulement de chauffage électrique direct (100) selon la revendication 3, dans lequel ledit matériau polymère flexible électro-conducteur comporte un matériau de caoutchouc électro-conducteur.

5. Système d'écoulement de chauffage électrique (100) selon l'une quelconque des revendications précédentes, dans lequel ladite région conductrice interne comprend au moins une couche métallique de fils de cuivre (180) qui sont torsadés sur une courte longueur de pose.

6. Système d'écoulement de chauffage électrique direct (100) selon la revendication 5, dans lequel ladite région conductrice interne comprend au moins une couche métallique de fils de cuivre torsadés (180) dont l'angle de pose est dans une plage de 17° à 20°.

7. Système d'écoulement de chauffage électrique direct (100) selon l'une quelconque des revendications précédentes, dans lequel la région isolante annulaire (1890, 200) est mise en oeuvre par une gaine semi-conductrice (190) entourant la région conductrice interne (180), et une gaine isolante en matériau polymère (200) entourant la gaine semi-conductrice (190).

8. Système d'écoulement de chauffage électrique direct (100) selon la revendication 7, dans lequel l'épaisseur de la gaine semi-conductrice (190) est au moins 10 % de l'épaisseur de la gaine isolante de matériau polymère (200).

9. Système d'écoulement de chauffage électrique direct (100) selon l'une quelconque des revendications précédentes, dans lequel le câble (120) est attaché via un conduit (30) à l'au moins un tuyau d'écoulement (20).

10. Système d'écoulement de chauffage électrique direct (100) selon la revendication 9, dans lequel le conduit (30) est sanglé à intervalles spatiaux périodiques à l'au moins un tuyau d'écoulement (20).

11. Système d'écoulement de chauffage électrique direct (100) selon l'une quelconque des revendications précédentes, dans lequel ladite région conductrice interne (180) est adaptée pour acheminer du courant pour chauffer au moins une partie dudit au moins un tuyau d'écoulement (20), et ladite région de guide d'onde à fibre optique (160) est utilisable pour acheminer les signaux correspondant à une ou plusieurs mesures effectuées sur ledit au moins un tuyau d'écoulement (20).
